# EUROPÄISCHE PATENTSCHRIFT

(11) **EP 0 574 693 B1**
(45) Veröffentlichungstag und Bekanntmachung des Hinweises auf die Patenterteilung: **15.09.1999**
(21) Anmeldenummer: 93107511.3
(22) Anmeldetag: 08.05.1993
(51) Int. Cl.: G05B 13/02, G05B 23/02, D01H 5/42

(54) **Verfahren und Vorrichtung zur Signalanalyse einer Regulierstrecke**
Method and device for the signal analysis of a regulating stage
Procédé et dispositif pour l'analyse des signaux d'un segment de réglage

(30) Priorität: 17.06.1992 DE 4219777
(43) Veröffentlichungstag der Anmeldung: 22.12.1993
(73) Patentinhaber: Rieter Ingolstadt Spinnereimaschinenbau AG, 85055 Ingolstadt (DE)
(72) Erfinder: Denz, Peter, W-8899 Hohenwart (DE)
(74) Vertreter: Bergmeier, Werner, Dipl.-Ing.

(56) Entgegenhaltungen:
- EP-A- 0 412 448
- WO-A-89/08877
- CH-A- 668 781
- DE-A- 4 215 682
- US-A- 4 974 296

## Beschreibung

Die Erfindung betrifft ein Verfahren zur Signalanalyse von Signalen einer Regulierstrecke der Textilindustrie, wobei Meßsignale zu einem Faserband vor einem Streckwerk von Meßgliedern und nach dem Streckwerk von Meßgliedern erfaßt werden und an eine Regulierung, die mit einem Rechner arbeitet, geliefert werden und dort einlaufende Meßsignale ausgewertet werden und mittels Auswertung die Regulierung über einen Servoantrieb den Verzug des Streckwerks regulieren kann und ein Hauptmotor für das Streckwerk vorgesehen wird. Eine Vorrichtung zur Signalanalyse von Meßsignalen einer Regulierstrecke der Textilindustrie dient zur Durchführung des Verfahrens.

Der Begriff der Regulierung umfaßt hier das Steuern und Regeln des Verzugs. Umwelteinflüsse und maschineninterne Einflüsse an einer Regulierstrecke führen zur Beeinflussung einer Vielzahl von Signalen und Meßwerten. Fehler in Signalen zu erkennen, zu kompensieren und Hinweise zur Fehlerlokalisation an der Regulierstrecke zu geben, dient der Verbesserung der Erzeugnisqualität und einer höheren Verfügbarkeit der Regulierstrecke.

Die bekannten Algorithmen einer Regulierung sind für ganz spezielle Aufgaben geschaffen. Das ist aber die kritische Situation für die Regulierung bekannter Art. Der Algorithmus ist an festgelegte, exakt definierte Maschinenabläufe und Einflußgrößen gebunden, d.h. die Regulierung ist durch spezifische Rechenprogramme festgelegt. Ein Nachteil dieser Einschränkung ist, daß dennoch umweltbedingte und maschinenbedingte Faktoren die Regulierung beeinflussen, da sie ungenügend im Algorithmus beschreibbar und somit ungenügend kompensiert werden können (vgl. EP 412 448).

Schwerwiegend für das Reguliersystem ist, daß solche Fehler im Meßsignal des Meßgliedes entstehen können. Ein Meßglied ist üblicherweise eine mechanische Tastrolle. Das Meßglied kann aber auch ein anderes Meßprinzip haben. Das hätte zur Folge, daß die nachfolgend beschriebenen Einflußfaktoren mehr oder weniger stark wirken würden.

Ein umweltbedingter Einflußfaktor ist beispielsweise die Temperatur der Tastrollen, welche ein Meßsignal zur Dicke des Faserbandes liefern. Nach einem längeren Stillstand des Streckwerkes haben die Tastrollen Umgebungstemperatur angenommen. Nach dem Start des Streckwerkes vergeht in Abhängigkeit der Umgebungstemperatur ein nicht exakt definierter Zeitraum bis die Tastrollen Betriebstemperatur (bedingt durch Reibung mit dem Faserband) erreicht haben, d.h. die Durchmesser der Tastrollen verändern sich in nicht bekannter Weise, so daß die Bildung des Meßsignals fehlerbehaftet ist. Diese Änderung der Einflußgröße Temperatur an den Tastrollen bis zum Erreichen der Betriebstemperatur ist in einem Algorithmus nicht exakt modellierbar und somit dieser Einfluß auf die Tastrollen für das Reguliersystem nicht exakt korrigierbar.

Bisherige Regulierverfahren können diesen Nachteil nicht wirkungsvoll beseitigen.

Ein Faktor anderer Art, der Einfluß auf die Bildung des Meßsignals ausübt, ist die Stillstandszeit des Faserbandes bis zur Weiterverarbeitung auf der Regulierstrecke. Während dieser Zeit wird sich die Komprimierbarkeit des Faserbandes z.B. durch Rückbildung der Kräuselung, Änderung der Feuchtigkeit usw. ändern, was eine Abweichung der gemessenen Dicke des Faserbandes zur Folge hat. Dieser Sachverhalt spielt bei den üblichen Regulierverfahren eine entscheidende Rolle.

Ein weiterer Nachteil ist, daß bekannte Reguliersysteme die Ursache einer Störung nicht lokalisieren. Beispielsweise ist bei einer Streckwerksabschaltung wegen Überschreitung der Bandnummer nicht erkennbar, ob mittelwellige oder langwellige Bandfehler die Ursache waren. Ebenso werden Störungen z.B. in der Transmission zwischen dem Hauptmotor und Hauptverzugswalzenpaar nicht erkannt.

Die WO 89/08877 beschreibt ein Verfahren zur Steuerung der Betriebsweise einer Stanzpresse. Dort werden von einem Druckkraftsensor und einem Drehwinkelsensor Signale geliefert und in einem Steuersystem verarbeitet. Das vom Sensor gelieferte Meßsignal wird in einer Signalauswertung nach einer einzelnen Vorschrift ausgewertet. Mit der dortigen Auswertung sind keine Fehlerursachen beim Betrieb der Stanzpresse ableitbar. Das Dokument ist nicht für Textilmaschinen zutreffend.

Aufgabe der Erfindung ist es, elektrische Signale oder Meßwerte einer Strecke zu analysieren, so daß aufgrund dieser Analysen Korrekturen vorgenommen werden können, Störungen angemeldet werden können oder spezielle Wartungen angefordert werden können.

Die Aufgabe wird verfahrensgemäß gelöst nach den kennzeichnenden Merkmalen des Anspruchs 1 und vorrichtungsgemäß nach den kennzeichnenden Merkmalen des Anspruchs 9.

Die Dicke des Faserbandes und die Geschwindigkeit des Faserbandes werden vor und nach dem Streckwerk mittels Meßglieder ermittelt. Diese Meßwerte werden parallel zur Regulierung jeweils unterschiedlichen, parallel zueinander arbeitenden Signalanalysen zugeführt. Von jedem erfaßten Meßsignal werden zusätzliche, zeitbezogene Signalanalysen zur Faserbanddicke und zur Faserbandgeschwindigkeit gemacht.

Die Signalanalysen werden nicht nur von Signalen aus der Faserbandmessung gemacht. Zusätzlich werden auch andere maschineninterne Signale erfaßt und zusätzlichen, zeitbezogenen Signalanalysen zugeführt. Die Signalanalysen werden kontinuierlich gemacht, aber nur dann abgefragt, wenn eine Recherche ausgelöst wird. Die Arten der zeitbezogenen Signalanalysen werden nach Expertenwissen ausgewählt. Die zeitbezogenen Signalanalysen werden mit einem Rechner realisiert. Sie sollen die Erkennung korrekturfähiger Abweichungen innerhalb der analysierten Signale sowie die Bildung von geeigneten Korrekturwerten ermöglichen.

Welche der Signalanalysen eingesetzt werden, hängt ab vom eingesetzten Expertenwissen. Es können auch Analyseverfahren zur Erkennung von Rohstoffarten, Rohstoffqualität, Betriebszuständen und Maschineneinstellungen eingesetzt werden.

Das Ergebnis (Signalkenngröße) jeder zusätzlichen, zeitbezogenen Signalanalyse erhält einen Speicherplatz zugewiesen. Auf diesem Speicherplatz wird immer der zuletzt gebildete Wert abgelegt und der Vorgängerwert dabei überschrieben, jedoch erst, wenn ein Vergleich von einem zeitlichen Vorgängerwert zu einem neuen, aktuelleren Wert eine Übereinstimmung in vorgegebener Toleranz ergibt.

Es kann aber auch eine Abweichung geben. Ist dies der Fall, wird die Übernahme des anfangs verglichenen, aktuelleren Signals noch verhindert. Aufgrund dieser Abweichung und deren Art (positiv, negativ, spektral) wird wieder unter Einbeziehung von Expertenwissen (d.h. im Zusammenwirken mit dem Wissensspeicher des Rechners) eine Recherche (das entspricht einer Abfrage) von Inhalten relevanter Analysespeicher erfolgen.

Im Zusammenwirken mit dem Wissensspeicher des Rechners wird erkannt, ob die Abweichung aufgrund einer Störung in der Maschine erfolgte, oder ob sich die Abweichung in Größe und Vorzeichen erklären läßt, d.h. eine logische Konsequenz der Recherche ist.

Konkrete Störungen haben konkrete Signalabweichungen zur Folge, so daß andererseits Signalabweichungen konkreten Störungen zugeordnet werden können, was einer logischen Konsequenz entspricht. Wird eine korrekturfähige Abweichung in einem Signal erkannt, so wird sofort der erforderliche Korrekturwert durch Auswertung der Abweichung ermittelt und dem Signal zugeschlagen. Der bisher zurückgehaltene, aktuelle Wert wird in den Speicher übernommen und der Vorgängerwert wird überschrieben.

Eine Abweichung kann durch das Ergebnis der Recherche auch als Störung innerhalb der Maschine erkannt werden. In diesem Fall wird die Maschine gestoppt und das Ergebnis der Recherche als Hinweis zur Fehlerlokalisierung genutzt.

Eine Abweichung kann durch das Ergebnis der Recherche als logische Konsequenz von gewollten, manuellen Eingriffen erkannt werden. In diesem Fall, erfolgt ohne weitere Korrektur die Übernahme der bisher zurückgehaltenen, aktuellen Analysewerte in die Speicher.

Es ist ein Vorteil, daß das Verfahren parallel und unabhängig zur bestehenden Regulierung arbeitet. Es arbeitet damit beeinflussungsfrei von der Regulierung. Das Verfahren ist vorteilhafterweise in der Lage, die aus maschineninternen Einflüssen und umweltbedingten Einflüssen resultierenden Fehler auf die Regulierung zu erkennen und über beeinflussungsfrei zu bildende Korrekturwerte auszugleichen.

Die erweiterte Möglichkeit, logische Konsequenzen bei Signalanalysen zu bilden, bringt den Vorteil, Fehlerursachen zu ermitteln. Das ist eine neue Qualität gegenüber bekannten Verfahren zur Korrektur der Regulierung. Es erkennt weiterhin ungünstige Maschineneinstellungen, Überlastungen. Es gibt Hinweise auf erforderliche, spezielle Wartungsarbeiten und es erkennt plötzlich auftretende Materialverschlechterungen. Das Verfahren kann weiterhin protokollarisch manuelle Eingriffe und Betriebsdaten wiedergeben.

Ein Ausführungsbeispiel der Erfindung ist in der Zeichnung dargestellt und im folgenden näher beschrieben.

Es zeigen
- Figur 1:: Funktionelle Einbindung der Signalanalysen bei Faserbandmessungen in ein bestehendes Reguliersystem,
- Figur 2a:: Signalanalysen beim Servoantrieb,
- Figur 2b:: Signalanalysen beim Hauptmotor
- Figur 3:: Komplexe Struktur zusammengefaßter Signalanalysen

Es folgt die Erläuterung der Erfindung anhand der Zeichnung nach Aufbau und Wirkungsweise der dargestellten Erfindung.

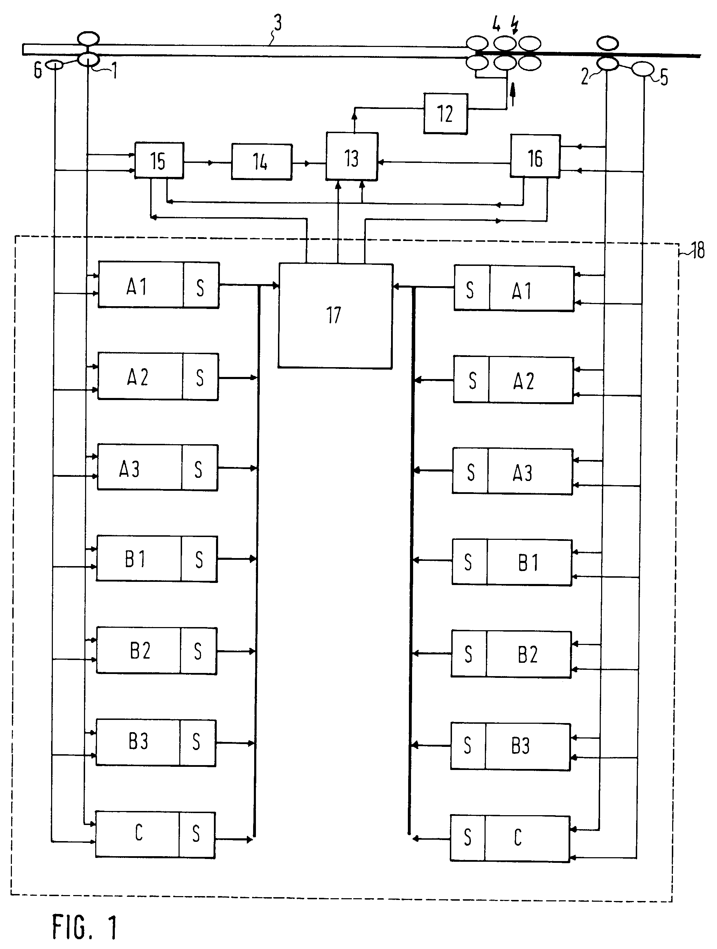

Das Reguliersystem kann eine Steuerung des Verzuges, eine Regelung des Verzuges oder eine Kombination aus beiden sein. Im Beispiel nach Figur 1, handelt es sich um eine Regulierung, die den Verzug steuernd verändert. Die nach dem Stand der Technik bekannte Regulierung wird in Fig. 1 durch jenen Teil dargestellt, der außerhalb der Signalanalysen 18 angeordnet ist. Zu diesem Zweck ist vor dem Streckwerk 4 ein Meßglied 1 angeordnet. Dieses Meßglied ist üblicherweise eine mechanische Tastwalze zur Ermittlung der Faserbanddicke. Mit dem Meßglied 1 ist ein Drehzahlgeber 6 gekoppelt, der die Einlaufgeschwindigkeit des Faserbandes 3 ermittelt. Beide Meßsignale werden an die Meßwertaufbereitung 15 übergeben. Die von der Meßwertaufbereitung 15 gelieferten Werte werden in Abhängigkeit von der Geschwindigkeit des Faserbandes von der Meßwertverzögerung 14 verzögert an die Regulierung 13 übermittelt. Die Regulierung 13 übermittelt an den Servoantrieb 12 ein Signal, welches über den Servoantrieb 12 eine Stellhandlung gegenüber dem Verzug des Streckwerkes 4 auslösen kann.

Weiterhin ist erkennbar, daß am Ausgang des Streckwerkes 4 ein weiteres Meßglied 2 die Faserbanddicke erfaßt. Das kann beispielsweise eine mechanische Tastwalze sein oder ein Meßglied mit anderen physikalischem Meßprinzip. Im vorliegenden Beispiel wird die Auslaufgeschwindigkeit des Faserbandes durch die Kopplung eines Drehzahlgebers 5 mit der Tastwalze 2 ermittelt. Beide Signale am Ausgang werden ebenfalls durch eine Meßwertaufbereitung 16 erfaßt. Die Meßwertaufbereitung 16 übermittelt die entsprechenden Signale an die Regulierung 13. Üblicherweise werden die Signale vor den Eingang und nach dem Ausgang des Streckwerkes 4 erfaßt, um über eine Korrelation in der Regulierung 13 einen Korrekturwert für Reguliereinsatzpunkt bzw. Regulierintensität zu ermitteln.

Ein Merkmal der Erfindung ist, daß die Meßsignale sowohl am Eingang als auch am Ausgang des Streckwerkes 4 in jeweils parallelen Pfaden abgezweigt werden und Signalanalysen 18 zugeführt werden. Diese Signalanalysen arbeiten parallel und unabhängig zur Regulierung. Figur 1 zeigt Signalanalysen 18 bei Faserbandmessungen.

Ein Merkmal der Signalanalysen 18 bei Faserbandmessungen ist, daß die
- Meßsignale der Faserbanddicke der Tastwalze 1 und die Einlaufgeschwindigkeit des Faserbandes ermittelt vom Drehzahlgeber 6
als Signale vor dem Eingang des Streckwerkes erfaßt und die
- Meßsignale der Faserbanddicke der Tastwalze 2 und die Auslaufgeschwindigkeit des Faserbandes ermittelt vom Drehzahlgeber 5
als Signale nach dem Ausgang des Streckwerkes 4 erfaßt und sowohl dem bekannten Reguliersystem als auch den erfindungsgemäßen Signalanalysen 18 zugeführt werden. Von jedem erfaßten Meßsignal werden zusätzliche, zeitbezogene Signalanalysen gemacht. Die Arten der zeitbezogenen Signalanalysen werden nach Expertenwissen gemacht, d.h. beispielsweise Differenzieren mit Maxima/Minima -Auswertung über unterschiedlichste Zeitintervalle Δt oder Differentialquotienten dt oder Integrieren über verschiedene Zeiten. Dazu wird ein Rechner 17 benutzt. Bei ausreichendem Leistungsumfang des im Reguliersystem bereits vorhandenen Rechners kann dieser genutzt werden oder es muß ein separater Rechner dafür eingesetzt werden.

Schritte der Signalanalysen nach Figur 1 sind beispielsweise
- Mittelwertbildung der Faserbanddicke zu unterschiedlichen Faserbandlängen
- Bildung des Differentialquotienten über verschiedene Zeitlängen zu unterschiedlichen Betriebszuständen
- Spektralanalyse z.B. zur Erkennung unterschiedlicher Faserbandmaterialien

Wie Figur 1 zeigt, sind die Variationen der Signalanalysen zutreffend sowohl für Meßsignale vom Meßglied 1 als auch für Meßsignale vom Meßglied 2. Die Mittelwertbildung der Faserbanddicke ist in drei parallele Analysen aufgeteilt. Der Unterschied zwischen den Analysen besteht in der zu untersuchenden Länge des Faserbandes, je nach Kennzeichnung für kurze Längen A1, mittlere Längen A2 und lange Längen A3. Die Mittelwertbildung entspricht einer Analysestufe.

Die Mittelwertbildung erfolgt auch für Zeitzustände, d.h. Betriebszustände wie z.B. Stillstand, Hochlauf usw..

Die Signalanalysen mittels Differentialquotienten der Zeit erkennen Signaländerungsgeschwindigkeiten sowohl im Betrieb als auch im Stillstand der Maschine. Diese Signalanalysen sind ebenfalls in drei parallele Analysen
- Differentialquotient kurze Zeit B1
- Differentialquotient mittler Zeit B2
- Differentialquotient lange Zeit B3
aufgeteilt. Dies entspricht ebenso einer Analysestufe.

Es ist auch vorgesehen, die Speicherung von Betriebsdaten gegenüber Stillstandsdaten (möglich sind auch Daten anderer Betriebszustände) getrennt zu halten, um bei späteren Recherchen, z.B. den Speicherinhalt zu dem Stop des Streckwerkes mit dem neuen Wert zu dem Start des Streckwerkes zu vergleichen und dadurch evtl. Korrekturen (nach Expertenwissen im Programm) von Daten, die aufgrund längerer Stillstände oder Temperaturbeeinflussung fehlerbehaftet sind, vorzunehmen.

Eine weitere Signalanalyse als eigenständige Analysestufe im Gesamtkonzept ist das Spektrogramm C. Das Spektrogramm C analysiert Rohstoffqualität und Rohstoffarten. Es ermöglicht eine Erkennung materialspezifischer Eigenschaften, wie sie beim Einsatz unterschiedlicher Faserbandmaterialien vorkommen, durch die Analyse gewonnener Spektrallinienbilder. Die Spektrogramme können aber auch zum Erkennen periodischer Störungen im Faserband genutzt werden, um einen Maschinenstop auszulösen oder eine spezielle Wartung zu fordern.

Alle diese Signalanalysen liefern ihre aktuellen Ergebnisse (das sind Signalkenngrößen) an zugehörige Speicherplätze S, d.h. auf dem jeweiligen Speicherplatz S befindet sich der zuletzt abgelegte, aktuelle Wert. Der Vorgängerwert wird dabei überschrieben. Das Überschreiben des Vorgängerwertes erfolgt aber erst nach Vergleich zwischen Vorgängerwert und aktuellem Wert. Liegt die Abweichung des Vergleiches innerhalb einer Toleranz, wird der Vorgängerwert überschrieben. Ist diese Abweichung des Vergleiches außerhalb des Toleranzbereiches, wird dies als Abweichung erkannt und der aktuelle Wert noch nicht im Speicherplatz übernommen. Aufgrund der Abweichung beim Vergleich (z.B. beim Mittelwert) und deren Art (positiv, negativ, spektral) wird eine Abfrage (Recherche) aller relevanten Speicherplätze S ausgelöst. Im Ergebnis wird ein kausaler Zusammenhang zu der Abweichung (Fehler) aus dem Vergleich und einer möglichen Störungsursache mittels Expertenwissen (Wissensspeicher im Rechner 17) ermittelt und klassifiziert. Der Wissensspeicher speichert deshalb nach Expertenwissen eine funktionale Matrix. Für die Dauer des Fehlers wird bei korrekturfähigen Abweichungen im Rechner 17 ein Korrekturwert ermittelt und in die Regulierung 13 eingeführt, so daß die Korrektur noch vor Bildung des Stellsignales für den Verzug realisiert ist. Gelingt die Korrektur nicht, wird das Streckwerk 4 gestoppt.

Aufbauend auf dieser beschriebenen Grundstruktur der Signalanalysen bei Faserbandmessungen kann der Umfang mit neuen, zweckmäßigen Signalanalysen erweitert werden. Diese Erweiterungen resultieren aus anderen Signalen innerhalb der Maschine. Solche zweckmäßigen Erweiterungen neben den Signalen bei Faserbandmessung können beispielsweise sein:
a) Signale aus Messungen am Servoantrieb und/oder
b) Signale aus Messungen am Hauptmotor und/oder
c) Signale aus Messungen an Bedienelementen.

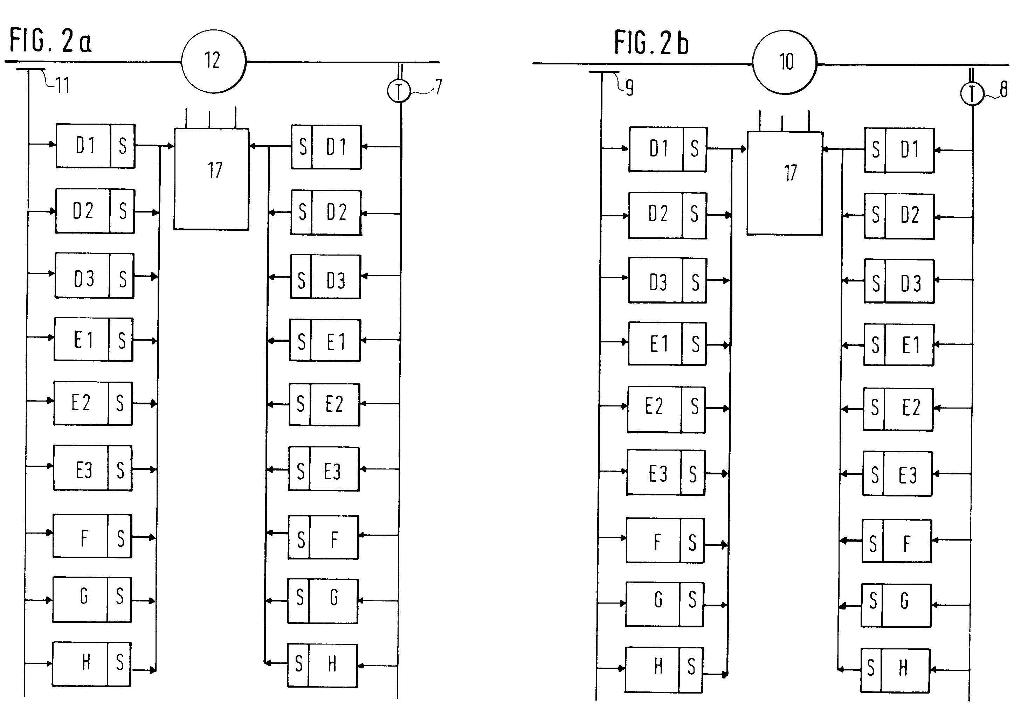

Diese Aufzählung erhebt keinen Anspruch auf Vollständigkeit. Die Signalanalysen der Sachverhalte a) und b) sind separat und auszugsweise in Figur 2a und Figur 2b dargestellt.

Figur 2a zeigt den strukturellen Aufbau und den Mindestumfang noch anzukoppelnder Signalanalysen zum Servoantrieb 12. Beim Servoantrieb 12 werden beispielsweise als elektrische Größe der Strom in der Energiezuleitung und als mechanische Größe die Drehzahl der Rotorwelle erfaßt. Die Erfassung der Stromgröße erfolgt durch den Stromwandler 11. Die Drehzahl wird an der Antriebswelle über den Drehzahlgeber 7 erfaßt. Der zeitliche Verlauf (Spektrogramm) des Stromes in der Energiezuleitung des Servoantriebes 12 korreliert mit der von der Regulierung vorgegebenen Stellgröße. Treten auf der Transmissionsseite Schäden an Transmissionselementen auf, z.B. Schäden am Lagerring eines Kugellagers oder eine zunehmende Schmutzablagerung zwischen Zahnrädern und Zahnriemen, so hat dies Auswirkungen auf die Stromaufnahme des Servoantriebes 12, nicht jedoch auf die Drehzahl (Stellgröße). Aufgrund dieser Tatsache kann ein Vergleich von Drehzahl und vorliegenden Stromänderungen vorgenommen werden, so daß logische Konsequenzen bezüglich der Störungsursache getroffen werden können; dies könnte z.B. die Anforderung einer Wartung sein. Signalanlysen nach Figur 2a und 2b sind
- Mittelwertbildung kurze Zeit D1
- Mittelwertbildung mittlere Zeit D2
- Mittelwertbildung lange Zeit D3
- Differentialquotient kurze Zeit E1
- Differentialquotient mittlere Zeit E2
- Differentialquotient lange Zeit E3
- Spektrogramm F
- Statistik G
- Ereignisse H

Diese genannten Signalanalysen werden sowohl für Stromwerte aus den Stromwandlern 11 bzw. 9 als auch für die Signale vom Drehzahlgeber 7 bzw. Drehzahlgeber 8 gemacht.

Figur 2b zeigt den strukturellen Aufbau und den Mindestumfang anzukoppelnder Signalanalysen zum Hauptmotor 10. Beim Hauptmotor 10 werden ebenfalls Stromwerte aus der Energiezuleitung sowie die Drehzahlwerte an der Rotorwelle erfaßt und analysiert. Tritt z.B. ein Schlupf in der Transmission auf, so hat das Auswirkungen auf die Geschwindigkeit der Lieferwalze, aber in Rückkopplung auch auf das Drehzahlverhalten des Rotors. Dies wiederum beeinflußt die Stromaufnahme des Hauptmotors 10. Ausgehend vom Stromwandler 9 werden die Stromwerte in einer Differentationsstufe verarbeitet. Über den Drehzahlgeber 8, der z.B. auf der Rotorwelle installiert sein könnte, wird die Drehzahlgröße exakt ermittelt und ebenfalls z.B. in einer Differentationsstufe verarbeitet. Eine ausgelöste Recherche würde in diesem Fall in Verbindung mit dem Expertenwissen des Rechners 17 ergeben, daß eine Wartungsanforderung ausgelöst werden muß.

Eine weitere Signalanalyse in Figur 2a und 2b ist die Ereigniszählung (Ereignisse H). Als Ereignisse werden beispielsweise gezählt Betriebsereignisse wie die Häufigkeit des Betätigens von Schalteinrichtungen z.B. manuelles oder automatisches Zu- oder Abschalten der Energiezufuhr für das Streckwerk (Regulierstrecke) oder Stromspitzen im Signal des Stromistwertes des Servoantriebes 12, die einen definierten Wert übersteigen.

Die Häufigkeit des Drückens der Starttaste (Ereignisse H) bezogen auf die Zeit und im Zusammenhang mit der Mittelwertbildung für kurze Längen A1 des Faserbandes gibt beispielsweise Auskunft, ob eine Abstellung der Strecke aufgrund nicht verziehbarer Faserbandstellen infolge Überschreitung (Schlingen, Knoten etc.) erfolgt ist. Das Ergebnis der Recherche in diesem Fall wäre eine Störungsmeldung "Schlingen im Einlauf".

Eine weitere Signalanlyse ist die statistische Erfassung von Betriebs- und Maschinendaten (Statistik G). Das sind beispielsweise eine Zählung der Einschaltdauer der Maschine oder eine Zählung der Produktionszeitdauer während der Einschaltdauer, andererseits auch eine statistische Auswertung von Ereignissen in Signalen.

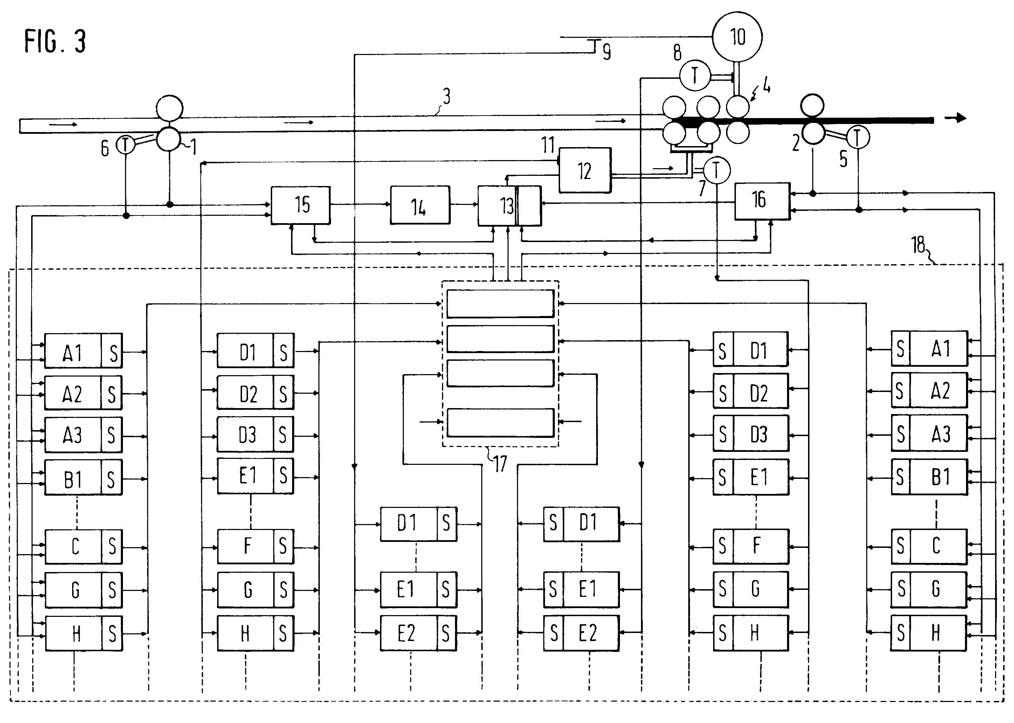

Ausgehend von Figur 1 und Figur 2a, 2b zeigt Figur 3 schematisch die Zusammenfassung der Signalanalysen bei Faserbandmessung, zum Servoantrieb und zum Hauptmotor sowie die Art der Ankopplung zusätzlicher Signalanalysen. Nach Figur 3 ist eine Ankopplung weiterer Signalanalysen bei Notwendigkeit möglich (dargestellt durch gestrichelte Verbindungspfade).

Die Signalanalysen in der Regulierung für ein Streckwerk beinhalten im einfachsten Fall sowohl Signalanalysen bei Faserbandmessungen, Signalanalysen beim Servoantrieb, Signalanalysen beim Hauptmotor. Diese Aufzählung erhebt keinen Anspruch auf Vollständigkeit, da die Anzahl der aufgezählten Signalanalysen abhängt von dem Umfang des notwendigen, zu installierenden Expertenwissens. Der Umfang des Expertenwissens wird wiederum von den Kriterien, die für die Regelung dieses Prozesses ausschlaggebend sind, bestimmt.

Die Treffsicherheit der aufgrund von Recherchen ausgelösten Maßnahmen ist umso höher, je komplexer der Umfang der Signalanalysen und damit die Recherchentiefe ist.

## Patentansprüche

1. Verfahren zur Signalanalyse von Meßsignalen einer Regulierstrecke der Textilindustrie,
wobei Meßsignale zu einem Faserband vor einem Streckwerk (4) von Meßgliedern (1, 6) und nach dem Streckwerk von Meßgliedern (2, 5) erfaßt werden und an eine Regulierung (13), die mit einem Rechner arbeitet, geliefert werden und dort einlaufende Meßsignale ausgewertet werden und mittels Auswertung die Regulierung (13) über einen Servoantrieb (12) den Verzug des Streckwerks (4) regulieren kann und ein Hauptmotor (10) für das Streckwerk (4) vorgesehen wird, dadurch gekennzeichnet, daß die erfaßten Meßsignale zum Faserband und zusätzlich andere maschineninterne Meßsignale parallel zur Regulierung (13) in unterschiedlichen und parallel zueinander arbeitenden Signalanalysen (18) zeitbezogen ausgewertet werden, dabei als Ergebnis der Signalanalysen aktuelle Signalkenngrößen gebildet werden und diese mit den vorhergehenden Signalkenngrößen, die zwischenzeitlich abgespeichert werden, verglichen werden, so daß bei Übereinstimmung in vorgegebener Toleranz die aktuellen Signalkenngrößen auf die zugehörigen Speicherplätze (S) übernommen werden, oder bei fehlender Übereinstimmung unmittelbar eine Abfrage aller relevanten, zwischengespeicherten Signalkenngrößen im Zusammenwirken mit einem Wissensspeicher des Rechners (17), wobei der Wissensspeicher eine funktionale Matrix über Expertenwissen beinhaltet, durchgeführt wird, so daß eine Abweichung als Störung oder korrekturfähige Abweichung klassifiziert wird.

2. Verfahren nach Anspruch 1, dadurch gekennzeichnet, daß bei anhaltender Dauer der fehlenden Übereinstimmung zwischen der vorhergehenden und der aktuellen Signalkenngröße für die korrekturfähige Abweichung ein Korrekturwert ermittelt wird, der vom Rechner (17) zur Regulierung (13) geliefert wird.

3. Verfahren nach Anspruch 1, dadurch gekennzeichnet, daß in dem Wissensspeicher als funktionale Matrix Störungsursachen der Regulierstrecke in Abhängigkeit von Abweichungen der Signalkenngrößen gespeichert werden.

4. Verfahren nach einem oder mehreren der Ansprüche 1 bis 3, dadurch gekennzeichnet, daß in dem Wissenspeicher alle möglichen Abfrageergebnisse und zugehörigen Abweichungen gespeichert werden.

5. Verfahren nach einem oder mehreren der Ansprüche 1 bis 3, dadurch gekennzeichnet, daß maschineninterne Meßsignale mindestens aus Messungen am Servoantrieb (12) und/oder aus Messungen am Hauptmotor (10) geliefert werden.

6. Verfahren gemäß einem oder mehreren der Ansprüche 1 bis 5, dadurch gekennzeichnet, daß Signalanalysen bei Faserbandmessungen die zu erfassenden Meßsignale
- Geschwindigkeit des zum Streckwerk einlaufenden Faserbandes
- Dicke des dublierten Bandes vor dem Streckwerk
- Geschwindigkeit des nach dem Streckwerk auslaufenden Faserbandes
- Dicke des Faserbandes nach dem Streckwerk
verarbeiten in mindestens den Signalanalysestufen
- Mittelwertbildung zu kurzen Längen, mittleren Längen und langen Längen des Faserbandes jeweils vor und nach dem Streckwerk
- Bildung des Differentialquotienten der Zeit für kurze Zeit, mittlere Zeit und lange Zeit jeweils vor und nach dem Streckwerk
- Spektrogramm mit FFT-Analyse des Faserbandes vor und nach dem Streckwerk
- statistisches Erfassen, Klassifizieren und Bewerten von Ereignissen in den Analysesignalen
- Erfassung von Ereignissen.

7. Verfahren nach einem oder mehreren der Ansprüche 1 bis 5, dadurch gekennzeichnet, daß die Signalanalysen bei Messungen am Servoantrieb die zu erfassenden Meßsignale
- Istwert des Stromes in der Energiezuleitung des Servoantriebes
- Drehzahl der Rotorwelle des Servoantriebes
verarbeiten in mindestens den Signalanalysestufen
- Mittelwertbildung des Stromes für kurze Zeit, mittlere Zeit, lange Zeit
- Differentialquotient des Stromes für kurze Zeit, mittlere Zeit, lange Zeit
- Mittelwertbildung der Drehzahl für kurze Zeit, mittlere Zeit, lange Zeit
- Differentialquotient der Drehzahl für kurze Zeit, mittlere Zeit, lange Zeit
- Spektrogramm mit FFT-Analyse
- Statistische Erfassung von Ereignissen.

8. Verfahren nach einem oder mehreren der Ansprüche 1 bis 5, dadurch gekennzeichnet, daß Signalanalysen bei Messung am Hauptmotors die zu erfassenden Meßsignale
- Spitzenwert oder Effektivwert des Stromes in der Energiezuleitung des Hauptmotors
- Drehzahl der Rotorwelle des Hauptmotors
- Schaltzustände der Bedienelemente
verarbeiten in mindestens den Signalanalysestufen
- Mittelwertbildung des Stromes für kurze Zeit, mittlere Zeit, lange Zeit
- Differentialquotient der Drehzahl für kurze Zeit, mittlere Zeit, lange Zeit
- Mittelwertbildung der Drehzahl für kurze Zeit, mittlere Zeit, lange Zeit
- Bildung des Differentialquotienten der Drehzahl für kurze Zeit, mittlere Zeit, lange Zeit
- Spektrogramm mit FFT-Analyse von Motorstrom und Drehzahl
- Statistik von Betriebs- und Maschinendaten
- Ereignisse an Bedienelementen.

9. Vorrichtung zur Signalanalyse von Meßsignalen einer Regulierstrecke der Textilindustrie, mit einem Meßglied (1,6) vor einem Streckwerk (4) und einem Meßglied (2,5) nach dem Streckwerk (4) zum Erfassen von Meßsignalen zu einem Faserband (3), mit einer Regulierung (13), die mit einem Rechner (17) arbeitet und die dort einlaufenden Meßsignale auswertet und über einen Servoantrieb (12) den Verzug des Streckwerks (4) reguliert und mit einem Hauptmotor (10) für das Streckwerk (4) zur Durchführung des Verfahrens nach Anspruch 1, dadurch gekennzeichnet, daß die Meßglieder (1, 2, 5, 6) und/oder andere Meßeinrichtungen verbunden sind mit unterschiedlichen und parallel zueinander arbeitenden Signalanalysen (18), die parallel zur Regulierung (13) angeordnet sind, zur zeitbezogenen Auswertung der Meßsignale zum Faserband und zusätzlich anderer maschineninterner Meßsignale und zur Bildung von Signalkenngrößen, daß die Signalanalysen (18) Speicherplätze (S) aufweisen zur zwischenzeitlichen Abspeicherung von vorhergehenden Signalkenngrößen oder Übernahme von aktuellen Signalkenngrößen, daß die Signalanalysen (18) mit dem Rechner (17) verbunden sind zur Durchführung von Abfragen der Inhalte der Speicherplätze (S) im Zusammenwirken mit einem Wissenspeicher des Rechners (17) und zur Klassifikation der Abweichung der aktuellen Signalkenngrößen von den vorhergehenden Signalkenngrößen als Störung oder korrekturfähige Abweichung, wobei der Wissenspeicher eine funktionale Matrix über Expertenwissen beinhaltet.

10. Vorrichtung nach Anspruch 9, dadurch gekennzeichnet, daß die Vorrichtung eine Ankopplung weiterer Signalanalysen aufweist.

## Claims

1. Process for signal analyses of measure-value signals of an autolevelling drawframe for textile industry in which by measuring devices (1,6) before a drawframe (4) and by measuring devices (2,5) after a drawframe (4) the measured-value signals of a fiber sliver are detected and delivered to a control system (13) which processes with a computer, where the incoming measured-value signals are analysed so that control system (13) can regulate the delay of drawframe (4) by a booster (12) and a main motor (10) is determined for the drawframe (4), **characterised in that** the detected measured-value signals of the fiber sliver and additionally other machine internal measured-value signals undergo a time-related evaluation in different and parallel processing signal analyses (18), parallel to autolevelling, in that updated signal magnitudes are established as the result of signal analyses and the latter are compared with the previous signal magnitudes which have been stored in the meantime, so that the updated signal magnitudes are received in the appertaining memory locations (S) if there is agreement within predetermined tolerances, or so that an interrogation of all relevant signal magnitudes in intermediate memory of the computer (17) is carried out immediately in the absence of agreement, in which the knowledge memory comprises a functional matrix about expert knowledge, so that the deviation is classified as disturbance or correctable deviation.

2. Process as in claim 1, **characterised in that** if agreement between previous and updated signal magnitudes is absent over a period of time, a correction value is determined for the correctable deviation, which is supplied by the computer (17) to the autolevelling device (13).

3. Process as in claim 1, **characterised in that** in the knowledge memory the reasons of disturbances of the autolevelling draw frame are stored as functional matrix pertaining of deviations of signal magnitudes.

4. Process as in one or several of the claims 1 to 3, **characterised in that** all possible results and their related deviations are stored in the knowledge memory.

5. Process as in one or several of the claims 1 to 3, **characterised in that** machine internal measured-value signals are supplied at least of measures of the booster (12) and/or of measures the main motor (10).

6. Process as in one or several of the claims 1 to 5, **characterised in that** the signal analyses process the measured-value signals
- speed of the fibre sliver entering the drawframe
- thickness of the doubled fibre sliver before the drawframe
- speed of the fibre sliver exiting the drawframe
- thickness of the fibre sliver after the drawframe
obtained in fiber sliver measurements in at least the following signal analyses steps:
- establishment of mean value pertaining of short length, medium length and long length of the fibre sliver, both before and after the drawframe
- establishment of differential ratio of the time for short periods, medium periods and long periods both before and after the drawframe
- spectrogram with FFT analyses of the fiber sliver before and after the drawframe
- statistical detection classification and evaluation of events in the analyses signals
- detection of events.

7. Process as in one or several of the claims 1 to 5, **characterised in that** the signal analyses process the measured-value signals
- actual value of the current in the power supply line of the the booster
- rotational speed of the rotor shaft of the booster
to be detected in measurements at the booster in at least the following signal analyses steps:
- establishment of mean values of current for short periods, medium periods, long periods
- differential ratio of the current for short periods, medium periods, long period
- establishment of mean values of the rotational speed for short periods, medium periods, long periods
- differential ratio of the rotational speed for short periods, medium periods, long periods
- spectrogram with FFT analyses
- statistical detection of events.

8. Process as in one or more of the claims 1 to 5, **characterised in that** signal analyses process the measured-value signals
- peak value or effective value of the current in the power supply line of the main motor
- rotational speed in the rotor shaft of the main motor
- switching states of the operating elements
to be detected at the main motor in at least the following signal analyses steps:
- establishment of mean values of the current for short periods, medium periods, long periods
- differential ratio of the rotational speed for short periods, medium periods, long periods
- establishment of mean value of the rotational speed for short periods, medium periods, long periods
- establishment of the differential ratio of the rotational speed for short periods, medium periods, long periods
- spectrogram with FFT analyses of motor current and rotational speed
- statistics of operational and machine data
- events on operating elements.

9. Device for signal analyses of measure-value signals of an autolevelling draw frame for textile industry with a measuring device (1,6) before a drawframe and a measuring device (2,5) after a drawframe (4) detecting measure-value signals to a fiber sliver (3) with a control system (13) which processes with a computer (17) and which analyses the incoming measured-value signals and which regulates the delay of the drawframe (4) by a booster (12) and with a main motor (10) for the drawframe (4) for proceeding with the device according to claim 1, **characterised in that** the measuring devices (1,2,5,6) and/or other measuring devices are connected with different and parallel processing signal analyses (18), which are parallel adjusted to the control system (13), for time-related evaluation of measured-value signals to the fiber sliver and additionally other machine internal measured-value signals, so that the signal analyses (18) show memory locations (S) for intermediate storage of previous signal magnitudes or take over of the updated signal magnitudes, that the signal analyses (18) are connected with the computer (17) for interrogation of the content of the memory locations (3) together with a knowledge memory of the computer (17) and for classification of deviation of updated signal magnitudes of the previous signal magnitudes as disturbance or correctable deviation, in which the knowledge memory comprises a functional matrix about expert knowledge.

10. Device as in claim 9, **characterised in that** the device comprises a coupling of further signal analyses.

## Revendications

1. Procédé pour l'analyse de signaux des signaux de mesure d'un banc d'étirage autorégulateur de l'industrie textile, des signaux de mesure relatifs à un ruban de fibres étant saisis par des organes de mesure (1, 6) avant un train d'étirage (4) et par des organes de mesure (2, 5) après le train d'étirage pour être transmis à une installation (13) de régulation qui est reliée avec un calculateur, les signaux de mesure y arrivant étant évalués, cette évaluation mettant l'installation (13) de régulation en mesure de réguler l'étirage du train d'étirage (4) par l'intermédiaire d'une servocommande (12), et un moteur principal (10) étant prévu pour le train d'étirage (4), caractérisé en ce que les signaux de mesure saisis relatifs au ruban de fibres et, en plus de cela, d'autres signaux de mesure émis à l'intérieur de la machine sont évalués dans le temps, parallèlement à la régulation (13), dans des installations d'analyse de signaux différentes et fonctionnant conjointement de façon parallèle, des paramètres de signaux actuels étant alors établis comme résultat des analyses des signaux, qui sont ensuite comparés aux paramètres de signaux précédents, mis en mémoire temporairement, si bien qu'en cas d'accord dans les tolérances prédéterminées, les paramètres de signaux actuels sont enregistrés dans les espaces mémoire (S) y affectées ou bien qu'en cas d'une manque d'accord une interrogation directe de tous les paramètres de signaux à considérer, mis dans une mémoire tampon, est effectuée, en concours avec une mémoire de connaissances du calculateur (17), cette mémoire de connaissances comprenant une matrice fonctionnelle des connaissances d'expert si bien qu'un écart est classifié comme dérangement ou comme écart susceptible d'être corrigé.

2. Procédé selon la revendication 1, caractérisé en ce qu'en cas que la manque d'accord entre le paramètre de signaux précédent et le paramètre de signaux actuel persiste, une valeur de correction est déterminée pour l'écart susceptible d'être corrigé qui est fourni par le calculateur (17) vers l'installation (13) de régulation.

3. Procédé selon la revendication 1, caractérisé en ce que des causes de dérangements du banc d'étirage autorégulateur sont mémorisées dans la mémoire de connaissances comme matrice fonctionnelle, en fonction des écarts des paramètres de signaux.

4. Procédé selon l'une ou plusieurs des revendications 1 à 3, caractérisé en ce que dans la mémoire de connaissances tous les résultats possibles d'interrogations ainsi que les écarts y relatifs sont mémorisés.

5. Procédé selon l'une ou plusieurs des revendications 1 à 3, caractérisé en ce que des signaux de mesure émis à l'intérieur de la machine sont fournis au moins de mesures effectuées à la servocommande (12) et/ou de mesures effectuées au moteur principal (10).

6. Procédé selon l'une ou plusieurs des revendications 1 à 5, caractérisé en ce que des installations d'analyse de signaux concernant des mesures de rubans de fibres traitent les signaux de mesure à saisir suivants :
- vitesse du ruban de fibres entrant dans le train d'étirage
- épaisseur du ruban doublé avant le train d'étirage
- vitesse du ruban de fibres sortant du train d'étirage
- épaisseur du ruban de fibres après le train d'étirage
dans au moins les paliers d'analyse de signaux suivants :
- établissement de la valeur moyenne relative à des longueurs courtes, des longueurs moyennes et des longueurs longues du ruban de fibres, respectivement avant et après le train d'étirage
- établissement de la dérivée du temps se basant sur le temps court, le temps moyen et le temps long avant et après le train d'étirage
- spectrogramme avec analyse « FFT » du ruban de fibres avant et après le train d'étirage
- saisie statistique, classification et évaluation d'évènements dans les signaux d'analyses
- saisie d'évènements.

7. Procédé selon l'une ou plusieurs des revendications 1 à 5, caractérisé en ce que les installations d'analyse de signaux concernant des mesures effectuées à la servocommande traitent les signaux de mesure à saisir suivants :
- valeur instantanée du courant dans la ligne électrique de la servocommande
- vitesse de rotation de l'arbre de rotor de la servocommande
dans au moins les paliers d'analyse de signaux suivants :
- établissement de la valeur moyenne du courant du temps court, du temps moyen, du temps long.
- dérivée du courant du temps court, du temps moyen, du temps long.
- établissement de la valeur moyenne de la vitesse de rotation du temps court, du temps moyen, du temps long.
- dérivée de la vitesse de rotation du temps court, du temps moyen, du temps long.
- spectrogramme avec analyse « FFT »
- saisie statistique d'évènements.

8. Procédé selon l'une ou plusieurs des revendications 1 à 5, caractérisé en ce que les installations d'analyse de signaux concernant des mesures effectuées au moteur principal traitent les signaux de mesure à saisir suivants :
- crête du courant ou valeur effective du courant dans la ligne électrique du moteur principal
- vitesse de rotation de l'arbre de rotor du moteur principal
- états de commutation des éléments de réglage
dans au moins les paliers d'analyse de signaux suivants :
- établissement de la valeur moyenne du courant du temps court, du temps moyen, du temps long
- dérivée de la vitesse de rotation du temps court, du temps moyen, du temps long
- établissement de la valeur moyenne de la vitesse de rotation du temps court, du temps moyen, du temps long.
- établissement de la dérivée de la vitesse de rotation du temps court, du temps moyen, du temps long.
- spectrogramme avec analyse « FFT » du courant du moteur et de la vitesse de rotation
- statistique des données d'exploitation et des données de la machine
- évènements survenus aux éléments de réglage.

9. Dispositif pour l'analyse de signaux des signaux de mesure d'un banc d'étirage autorégulateur de l'industrie textile, comportant un organe de mesure (1, 6) avant un train d'étirage (4) et un organe de mesure (2, 5) après le train d'étirage (4) pour saisir des signaux de mesure relatifs à un ruban de fibres (3), comportant, en outre, une installation (13) de régulation qui est reliée avec un calculateur, les signaux de mesure y arrivant étant évalués, cette évaluation mettant l'installation (13) de régulation en mesure de réguler l'étirage du train d'étirage (4), par l'intermédiaire d'une servocommande (12), et un moteur principal (10) pour le train d'étirage (4), pour la mise en oeuvre du procédé selon la revendication 1, caractérisé en ce que les organes de mesure (1, 2, 5, 6) et/ou d'autres installations de mesure sont reliés avec des installations d'analyse de signaux (18) différentes et fonctionnant conjointement de façon parallèle, et qui sont conçus tels qu'ils fonctionnent parallèlement à la régulation (13), dans le but d'une évaluation dans le temps des signaux de mesure relatifs au ruban de fibres et, en plus de cela, d'autres signaux de mesure émis à l'intérieur de la machine, et pour déterminer des paramètres de signaux; en ce que les dispositifs d'analyse de signaux (18) présentent des espaces mémoire (S) pour la mise en mémoire temporaire de paramètres de signaux précédents ou pour la prise en compte de paramètres de signaux actuels; en ce que les installations d'analyse de signaux (18) sont reliées avec le calculateur (17) afin de pouvoir effectuer des interrogations au sujet des contenus des espaces mémoire (S), en concours avec une mémoire de connaissances du calculateur (17), et pour classifier l'écart des paramètres de signaux actuels par rapport aux paramètres de signaux précédents comme dérangement ou comme écart susceptible d'être corrigé, cette mémoire de connaissances comprenant une matrice fonctionnelle des connaissances d'expert.

10. Dispositif selon la revendication 9, caractérisé en ce que le dispositif présente le couplage d'autres installations d'analyse de signaux.
